# EUROPEAN PATENT SPECIFICATION

(11) **EP 0 461 109 B1**
(45) Date of publication and mention of the grant of the patent: **20.04.1994**
(21) Application number: 89906814.2
(22) Date of filing: 02.06.1989
(51) Int. Cl.: H02K 3/14, H02K 3/04

(54) **STRANDED CONDUCTOR OF ELECTRICITY WITH A FLAT WIRE CORE**
LITZENARTIGER ELEKTRISCHER LEITER MIT EINEM FLACHEN DRAHTKERN
CONDUCTEUR ELECTRIQUE TORONNE AVEC NOYAU DE FILS PLATS

(30) Priority: 01.03.1989 IT 1960089
(43) Date of publication of application: 18.12.1991
(73) Proprietor: SIRTEN S.R.L., I-20063 Cernusco Sul Naviglio (IT)
(72) Inventor: MARCHEGIANI, Giuseppe, I-20099 Sesto San Giovanni (IT)
(74) Representative: Filippi, Remo
(86) International application number: IT8900043
(87) International publication number: WO9010336

(56) References cited:
- CH-A- 532 860
- DE-A- 3 241 506
- DE-C- 152 107
- DE-C- 312 728
- GB-A- 14 380
- PATENT ABSTRACTS OF JAPAN vol. 11, no. 306 (E-546)(2753) 06 October 1987, & JP-A-62 100144 (TOSHIBA) 09 May 1987.

## Description

The invention concerns a stranded conductor of electricity the cross section of which is square or rectangular.

It is well known that stranded conductors are made to carry alternating current reducing the effects of eddy currents, and must be easy to place alongside one another to reduce bulk as far as possible especially in the windings of electric machines.

It is also known that when a conductor of electricity carries alternating current (alternating current only or else super imposed over a component of direct current), its cross section resembles an uneven arrangement of small wires that are a cause of ohmic loss and reduce the total magnetic flow linked to the conductor itself.

Due to this latter phenomenon the inductance value of an inductor is lowered as frequency rises. The greater the dimension of the conductor perpendicular to the direction of flow, the more is this effect noticeable. For this reason conductors containing several parallel elements with suitable transpositions have been in use for some time, as have stranded conductors made up of many small elementary wires insulated one from another and of which the stranding constitutes continuous transposition. The various wires are laid symmetrically and the alternating current is split up equally among them. Eddy currents are greatly reduced inside each wire compared with those present in one big conductor whose overall cross section is the same as that of the stranded conductor.

According to present technology the stranded conductor consists of a central wire with a layer of wires wound helically round it and perhaps further concentric layers outside the first.

In order therefore to reduce conductor bulk and especially to facilitate arrangement of conductors in the windings of electric machines to make better use of available space, it has been found advantageous to compress said conductors and give them a cross section that is square or tending to rectangular.

The document GB-A-14360 concerns windings for dynamo electric machinery
To prevent the stranded conductors becoming bent by forces set up by magnetic attraction, a formation of windings is disclosed consisting of association of solid portions or reinforcements and of separate stranded wires.

Said solid portions or reinforcements may be applied internally or externally and be obtained by mutual adhesion of stranded wires using welding or some other process, by tubular wires, by C-section channels in bar form, by inlays namely by whole or partial pieces, such as bars, placed inside conductors.

Said solid portions may also be of brass or another material less conductive than copper, or of some other suitable material.

Pressing the windings down to increase the filling coefficient does not seem possible unless it occurs by chance, and in any case this is not envisaged.

If the solid portions, bar-shaped for example, are put inside to form the core, such a core does not permit division of the bar into various layers parallel to the larger side for the purpose of reducing eddy currents.

Such division, by reducing the height of the section reacting to bending stresses, would impede achievement of that 'rigidity' which is the sole purpose of disclosure GB-A-14380/1913.

The cable subject of the SIRTEN invention has an outer wall formed of one or more layers of wires, stranded or flat spirally wound wires, and a straight inner part or core, said core being formed of one or more superimposed thin tapes or flat wires, electric conductors, of equal thickness and width. These tapes are electrically insulated.

The purpose of this is to reduce the bulk of the cable as well as eddy currents by means of a square or slightly rectangular cross section, and also to facilitate cooling by allowing cooling channels to be placed up against the greater sides of said tapes.

It is an advantage to have tape thickness equal to the diameter of the wires or stranded wires spirally wound round them, while the width of said tapes can be a multiple of said diameter of the wires or stranded wires.

The width of the tapes is the same and they are placed with their widest faces lying one over another.

The cable can be suitably pressed down to give it a square or rectangular cross section thus further increasing the filling coefficient and reducing bulk.

The advantages of the invention are clear.

Cables can be more easily made with square or rectangular cross sections, even extremely flattened with a ratio of any kind between the two sides, greatly reducing bulk and obtaining a considerable increase in the filling coefficient.

By placing the cables in windings so that the main component of flow - axial in a circular coil - is parallel to the greater side of the tapes, the dimension perpendicular to flow will be the least and effects of eddy current will be reduced to the minimum.

Cooling channels can also be placed parallel to the greater side of the tapes, so that heat is dispersed by the conductors through the lesser thickness thus reducing operating temperature.

The advantages secured by flattened cross sections are even more evident in the case of very thick conductors.

Where alternating current contains components of both higher and lower frequency or components of direct current, the higher frequency currents will pass through the finer wires and the lower frequency currents through the flat wires.

Characteristics and purposes of the invention will be made even clearer by the following examples of its execution illustrated by diagrammatic figures.
- Fig. 1:: Conductor of electricity, subject of the invention, with a flat wire core and one outer layer of wires, in perspective.
- Fig.2:: Cross section of the conductor in Fig. 1.
- Fig.3:: Conductor of electricity, subject of the invention, with three central flat wires and one outer layer of wires, in perspective.
- Fig.4:: Cross section of the conductor in Fig. 3.
- Fig.5:: Conductor of electricity, subject of the invention, with flat wire core and two outer layers of wires, in perspective.
- Fig.6:: Cross section of the conductor in Fig. 5.

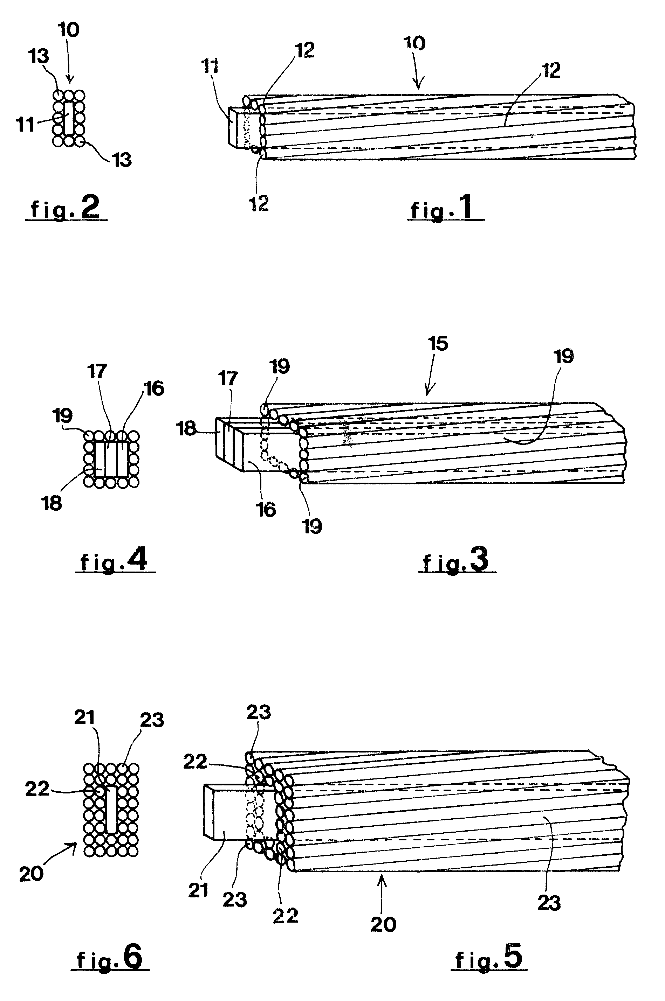

The stranded conductor of electricity 10 comprises a core 11 in the form of a flat wire, surrounded by a layer of twelve wires 12 wound in a loose spiral (Figs. 1, 2).

The flat wire lies straight inside the conductor and does not turn on its own axis.

Thickness of said flat wire is practically equivalent to the constant diameter of the wires forming the outer layer while its width is practically equivalent to three times said diameter.

As the figures show, the cross section of the conductor is substantially rectangular.

In Figs. 3 and 4 the conductor 15 comprises a core consisting of a set of three flat wires 16, 17, 18 surrounded by a layer of sixteen wires 19 wound in a loose spiral.

This set of flat wires also lies straight inside the conductor without turning on its own axis.

Thickness of each flat wire is substantially the same as the constant diameter of the wires forming the outer layer while width of each flat wire is equivalent to the sum of the three diameters of said wires.

As the figures show, the cross section of the stranded conduct or is substantially square.

Figs. 5 and 6 illustrate a stranded conductor 20 comprising a core of one flat wire 21 surrounded by a layer of wires 22 with another layer of wires 23 outside the first.

Thickness of the flat wire is practically equivalent to the constant diameter of the wires while its width is that of the sum of four of said diameters.

The cross section of this conductor is substantially rectangular.

The conductor subject of the invention has a cross section that is clearly square or rectangular according to the shape of the core formed of one or more flat wires.

The conductor so obtained is compressed to a greater or lesser extent to raise the coefficient of filling with accentuation of its geometrically square or rectangular shape.

The conductors are laid in the windings of electric machines in such a way that the main component of flow, which in a circular coil is axial, lies parallel to the broadest side of the flat wires.

In this way the dimension perpendicular to flow, namely the thickness of the flat wire, is the lesser and effects produced by eddy currents are reduced to a minimum.

## Claims

1. Stranded conductor of electricity (20), particularly of copper, comprising an axial core (16, 17, 18) surrounded by one or more layers of wires (19) or stranded wires, wound helically around the core, the conductor assisting the passage of low frequency current in said axial core and of high frequency current in the layers of wire or stranded wire wound helically round said core,
characterized in that the axial core is formed of several flat wires (17, 17, 18) of equal thickness and width and electrically insulated, the flat wires being superimposed and matching one with another, there being no means of mutual connection or stiffening between the flat wires, such as welding, the stranded conductor having a substantially square or rectangular cross section.

2. Conductor of electricity (20) as in claim 1, characterized in that it is compressed in order to accentuate the shape of a square or rectangular cross section and so increase the filling coefficient and reduce its bulk.

3. Conductor of electricity (20) as in claim 1, characterized in that the thickness of the flat wires (16, 17, 18) is substantially equal to the diameters of the wires (19) or stranded wires that are wound spirally round them while the width of said flat wires (16, 17, 18) is substantially a multiple of said diameter.

## Patentansprüche

1. Elektrischer Leiter in Strangform (20), speziell aus Kupfer, bestehend aus einem Axialkern (16, 17, 18), umgeben mit einer oder mehreren Schichten von Drähten (19) oder Litzen, die schraubenförmig um den Kern gewickelt sind, wobei der Leiter den Niederfrequenz-Stromfluß in besagtem Axialkern und den Hochfrequenz-Stromfluß in den Draht- oder Litzenschichten fördert, die schraubenförmig um ersteren gewickelt sind, gekennzeichnet durch den Umstand, daß der Axialkern aus mehreren Flachdrähten (16, 17, 18) gleicher Dicke und Breite besteht, die elektrotechnisch isoliert sind, wobei die Flachdrähte übereinandergelagert und gleichgroß sind, und keine Vorrichtungen zur gegenseitigen Verbindung oder Versteifung zwischen den Flachdrähten vorgesehen sind, wie etwa Verschweißungen, wobei der elektrische Leiter einen nahezu quadratischen oder rechteckigen Querschnitt aufweist.

2. Elektrischer Leiter (20) wie unter Patentanspruch 1) beschrieben, gekennzeichnet durch den Umstand, daß er auf eine solche Weise zusammengepreßt wird, daß seine Form mit quadratischem oder rechteckigem Querschnitt betont und so sein Füllungskoeffizient erhöht wird, um seinen Platzbedarf zu verringern.

3. Elektrischer Leiter (20) wie unter Patentanspruch 1) beschrieben, gekennzeichnet durch den Umstand, daß die Dicke der Flachdrähte (16, 17, 18) den Durchmessern der sie schraubenförmig umwickelnden Drähte (19) oder Litzen im wesentlichen entspricht, während die Breite besagter Flachdrähte (16, 17, 18) im wesentlichen ein Vielfaches jenes Durchmessers darstellt.

## Revendications

1. Conducteur électrique en corde (20), en particulier en cuivre, comprenant un noyau axial (16, 17, 18) entouré d'une ou plusieurs couches de fils (19) ou brins enroulés en hélice autour de l'âme, le conducteur favorisant le passage du courant à basse fréquence dans le dit noyau axial et du courant à haute fréquence dans les couches de fils ou brins enroulés en élice autour du premier,
caractérisé par le fait que le noyau axial est constitué de plusieurs fils plats (16, 17, 18) d'épaisseur et largeur égale et isolés électriquement, les fils plats étant superposés les uns sur les autres et coïncidant parfaitement sans moyen d'assemblage ni durcissement entre les fils plats, comme des soudures, le conducteur électrique ayant une section transversale presque carrée ou rectangulaire.

2. Conducteur électrique (20) comme à la revendication 1), caractérisé par le fait qu'il est comprimé de manière à accentuer la forme à section carrée ou rectangulaire et à augmenter ainsi le coefficient de remplissage et à réduire l'encombrement.

3. Conducteur électrique (20) comme à la revendication 1), caractérisé par le fait que l'épaisseur des fils plats (16, 17, 18) est substantiellement égale aux diamètres des fils (19) et des brins qui les entourent en hélice tandis que la largeur de ces fils plats (16, 17, 18) est substantiellement un multiple de ce diamètre.
